# EUROPÄISCHE PATENTSCHRIFT

(11) **EP 0 782 716 B1**
(45) Veröffentlichungstag und Bekanntmachung des Hinweises auf die Patenterteilung: **12.12.2001**
(21) Anmeldenummer: 95931883.3
(22) Anmeldetag: 13.09.1995
(51) Int. Cl.: G02B 27/28, G02B 7/00

(54) **VORRICHTUNG ZUR STRAHLTEILUNG**
BEAM DIVIDING DEVICE
DISPOSITIF SEPARATEUR DE FAISCEAUX

(30) Priorität: 22.09.1994 DE 4433763
(43) Veröffentlichungstag der Anmeldung: 09.07.1997
(60) Teilanmeldung: 00101036.2
(73) Patentinhaber: Heidelberger Druckmaschinen Aktiengesellschaft, 69115 Heidelberg (DE)
(72) Erfinder: ZELENKA, Thomas, D-24248 Mönkeberg (DE)
(86) Internationale Anmeldenummer: DE9501252
(87) Internationale Veröffentlichungsnummer: WO9609565

(56) Entgegenhaltungen:
- EP-B- 0 054 170
- DE-A- 4 128 468

## Beschreibung

Die Erfindung bezieht sich auf das Gebiet der Reproduktionstechnik und betrifft eine Vorrichtung zur Teilung eines Lichtstrahles in zwei Teilstrahlen.

Eine solche Vorrichtung zur Strahlteilung kann beispielsweise in einer Lichtstrahl-Abtasteinrichtung für Vorlagen-Abtastgeräte oder Aufzeichnungsgeräte Anwendung finden.

Bei einem Vorlagen-Abtastgerät, auch Eingabe-Scanner genannt, überstreicht der Lichtstrahl punkt- und zeilenweise die abzutastende Vorlage, und das von der Vorlage reflektierte oder durchgelassene Abtastlicht wird in einem optoelektronischen Wandler in ein Bildsignal umgewandelt.

Bei einem Aufzeichnungsgerät, auch Recorder, Belichter oder Ausgabe-Scanner genannt, wird der Lichtstrahl durch ein Bildsignal intensitätsmoduliert und der intensitätsmodulierte Lichtstrahl punkt- und zeilenweise über ein lichtempfindliches Aufzeichnungsmaterial geführt.

Bei einem Abtast- oder Aufzeichnungsgerät vom Flachbett-Typ ist die Halterung für die Vorlage bzw. das Aufzeichnungsmaterial eine ebene, relativ zur Lichtstrahl-Abtasteinrichtung bewegte Fläche, die der Lichtstrahl punkt- und zeilenweise überstreicht.

Bei einem Abtast- oder Aufzeichnungsgerät vom Innentrommel-Typ ist die Halterung für die Vorlage bzw. das Aufzeichnungsmaterial als stationäre, zylindersegmentförmige Mulde ausgebildet. Die Lichtstrahl-Abtasteinrichtung bewegt sich parallel zur Längsachse der Mulde, und der Lichtstrahl wird punkt- und zeilenweise senkrecht zur Längsachse radial über die Mulde geführt.

Aus der DE-A-41 28 468 ist bereits eine Lichtstrahl-Abtasteinrichtung mit einer Vorrichtung zu Teilung eines Lichtstrahles in zwei Teilstrahlen bei einem Aufzeichnungsgerät vom Innentrommel-Typ bekannt. Die Strahlteiler-Vorrichtung weist im wesentlichen eine stationäre Lichtquelle und eine Ablenkeinheit auf, die sich um eine optische Achse dreht. Die Ablenkeinheit besteht aus einem Polarisations-Strahlteiler, einem Polarisations-Umsetzer und einem Planspiegel.

Der von der stationären Lichtquelle kommende, polarisierte Lichtstrahl wird in der rotierenden Ablenkeinheit durch den Polarisations-Strahlteiler in zwei Teilstrahlen zerlegt, die von einem Bildsignal intensitätsmoduliert werden. Die beiden intensitätsmodulierten Teilstrahlen treten radial versetzt aus der Ablenkeinheit aus, werden auf ein in einer Belichtungsmulde fixiertes Aufzeichnungsmaterial fokussiert und belichten punkt- und zeilenweise das Aufzeichnungsmaterial. Mit den beiden intensitätsmodulierten Teilstrahlen werden pro Umdrehung der Ablenkeinheit zwei Zeilen auf dem Aufzeichnungsmaterial belichtet, wodurch eine hohe Aufzeichnungsgeschwindigkeit erzielt wird.

Um auch eine hohe Aufzeichnungsqualität zu erzielen, dürfen die beiden Teilstrahlen in der Aufzeichnungsebene keinen Positionsversatz senkrecht zur Zeilenrichtung gegenüber einer Sollposition aufweisen, in der beide Teilstrahlen in Deckung sind. Aufgrund eines solchen Positionsversatzes würden die auf dem Aufzeichnungsmaterial belichteten Zeilen nämlich nicht gleichabständig zueinander verlaufen, und störende Tonwertschwankungen wären die Folge, welche die Aufzeichnungsqualität erheblich mindern.

Die bekannte Strahlteiler-Vorrichtung hat den Nachteil, daß der in der stationären Lichtquelle erzeugte Lichtstrahl sehr genau in Richtung der optischen Achse bzw. der Drehachse der Ablenkeinheit justiert sein muß, damit die Teilstrahlen jeweils nach einer halben Umdrehung der Ablenkeinheit auf einer Zeile in der Aufzeichnungsebene ohne Positionsversatz senkrecht zur Zeilenrichtung auftreffen. Ist der Lichtstrahl bei der bekannten Strahlteiler-Vorrichtung nicht genau ausgerichtet, weisen die beiden Teilstrahlen jedoch einen bezüglich der Sollposition entgegengesetzt gerichteten Positionsversatz auf, d. h. die Strahlpositionen liegen links und rechts der Sollposition, wodurch ein relativ großer Positionsfehler entsteht. Eine genaue Justierung ist aber aufwendig und geht mit der Zeit verloren, so daß eventuell eine Nachjustierung erforderlich wird. Störende Positionsversätze der Teilstrahlen entstehen auch, wenn der Polarisations-Strahlteiler und der Planspiegel in der Ablenkeinheit aufgrund von Fertigungstoleranzen nicht genau zueinander ausgerichtet sind. Zur Kompensation von durch eine ungenaue Ausrichtung der optischen Bauelemente entstandenen Fehlern, weist die bekannte Strahlteiler-Vorrichtung beispielsweise eine einstellbare optische Justiervorrichtung in Form einer Keilplatte auf, die im Strahlengang zwischen Lichtquelle und Ablenkeinheit angeordnet ist. Eine derartige Justierung ist aber relativ aufwendig und ungenau, da sie nur durchgeführt werden kann, wenn sich die Strahlteiler-Vorrichtung nicht dreht.

Aufgabe der vorliegenden Erfindung ist es daher, eine Vorrichtung zur Strahlteilung derart zu verbessern, daß störende relative Positionsfehler der Teilstrahlen zueinander selbsttätig korrigiert werden und daß eine genaue Strahlteilung erreicht wird.

Diese Aufgabe wird durch die in dem Anspruch1 angegebenen Merkmale gelöst.

Vorteilhafte Weiterbildungen und Ausgestaltungen sind in den Unteransprüchen angegeben.

Die Erfindung wird im folgenden anhand der Fig. 1 bis 4 näher erläutert.

Es zeigen:
- Fig. 1: ein Ausführungsbeispiel für eine Strahlteiler-Vorrichtung mit einer Strahlpositionskorrektur,
- Fig. 2: ein weiteres Ausführungsbeispiel für die Strahlteiler-Vorrichtung mit einer Strahlpositionskorrektur,
- Fig. 3: ein Anwendungsbeispiel für die Strahlteiler-Vorrichtung und
- Fig. 4: eine Weiterbildung der Strahlteiler-Vorrichtung.

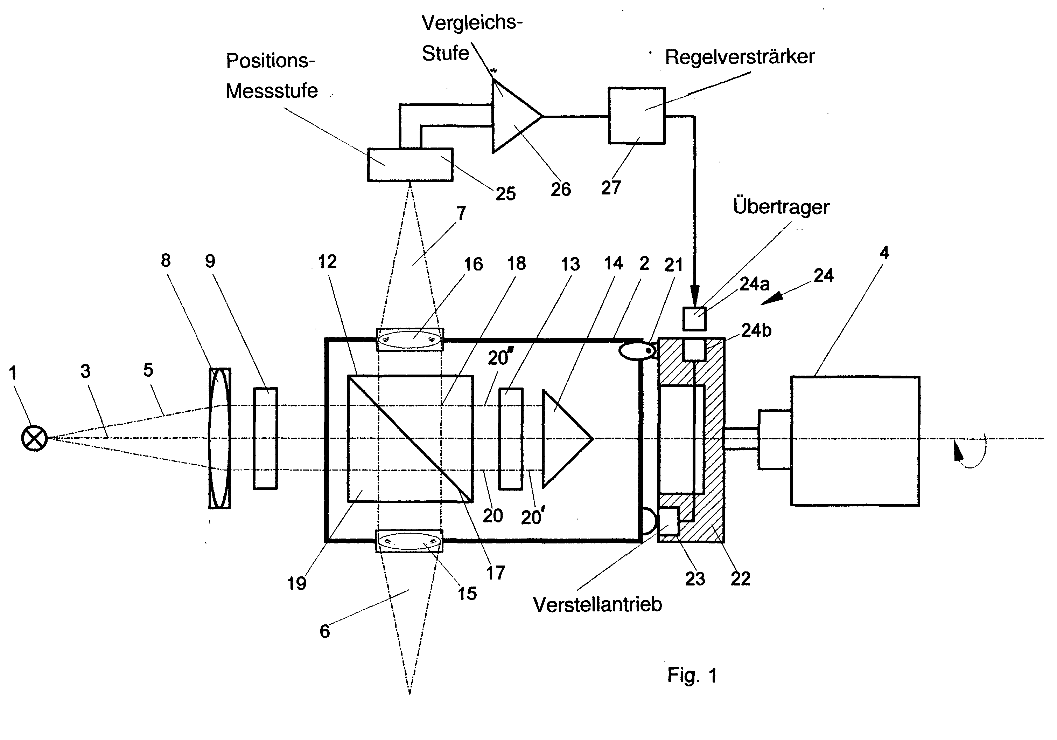

Fig. 1 zeigt ein Ausführungsbeispiel für eine Strahlteiler-Vorrichtung, die aus einer stationären Lichtquelle (1) und aus einer Ablenkeinheit (2) besteht. Die stationäre Lichtquelle (1) ist beispielsweise eine Halbleiter-Laserdiode. Die Ablenkeinheit (2) ist um eine optische Achse (3) drehbar gelagert und wird von einem Motor (4) angetrieben. In der stationären Lichtquelle (1) wird ein parallel zur optischen Achse (3) verlaufender Lichtstrahl (5) erzeugt. Der Lichtstrahl (5) wird in der Ablenkeinheit (2) in zwei radial zu der optischen Achse (3) verlaufende Teilstrahlen (6,7) zerlegt.

Die Strahlteilung kann mit einem nicht polarisierten oder einem polarisierten Lichtstrahl (5) durchgeführt werden. Im Ausführungsbeispiel erzeugt die Lichtquelle (1) einen linear polarisierten Lichtstrahl (5), der in einen zirkular polarisierten Lichtstrahl (5) umgesetzt wird. Grundsätzlich kann auch jede andere Lichtquelle, die einen nicht polarisierten Lichtstrahl erzeugt, in Verbindung mit einem Polarisator verwendet werden, um den linear oder zirkular polarisierten Lichtstrahl (5) zu erzeugen.

Zwischen der Lichtquelle (1) und der Ablenkeinheit (2) sind auf der optischen Achse (3) ein Linsensystem (8) und ein erster Polarisations-Umsetzer (9) zur Transformation einer linearen Polarisation in eine zirkulare Polarisation angeordnet. Der erste Polarisations-Umsetzer (9) kann entfallen, wenn zur Strahlteilung ein nicht polarisierter oder bereits ein zirkularpolarisierter Lichtstrahl (5) herangezogen wird.

Im dargestellten Ausführungsbeispiel erzeugt das Linsensystem (8) einen parallelen, d. h. nicht vorfokussierten Lichtstrahl (5), und der Polarisations-Umsetzer (9) ist als Wellenplatte, beispielsweise als λ/4-Platte, ausgebildet.

Die Ablenkeinheit (2) besteht im wesentlichen aus einem Polarisations-Strahlteiler (12), einem zweiten Polarisations-Umsetzer (13) und einem Reflektor (14). Die optischen Elemente sind auf der optischen Achse (3) hintereinander angeordnet und miteinander zu einer kompakten Einheit, beispielsweise durch Klebung, zusammengefaßt.

Der Polarisations-Strahlteiler (12) hat eine Polarisationsschicht (17), von der ein polarisierter Lichtstrahl in Abhängigkeit von der Polarisationsrichtung reflektiert oder durchgelassen wird. Die Polarisationsschicht (17) wird in der Regel aus mehreren dielektrischen Schichten mit unterschiedlichen Brechungsindizes gebildet. Alternativ kann die Polarisationsschicht (17) aus einer polarisierenden Folie aus Kunststoff oder einem anderen geeigneten Material bestehen. Als Träger für die Polarisationsschicht (17) kann eine Glasplatte oder, wie im Ausführungsbeispiel, ein aus zwei Dreikantprismen (18, 19) gebildeter Würfel verwendet werden, wobei die Polarisationsschicht (17) im Bereich der einander zugewandten Begrenzungsflächen der Dreikantprismen (18, 19) angeordnet ist.

Der zweite Polarisations-Umsetzer (13) ist beispielsweise eine doppelbrechende Platte, die zusammen mit dem Reflektor (14) eine 90°-Drehung der Polarisationsebene eines linear polarisierten Lichtstrahles bewirkt.

Der Reflektor (14) ist vorzugsweise als Tripelprisma ausgebildet. Ein Tripelprisma weist drei unter 90° zueinander stehende Spiegelflächen auf, die an einer Spiegelekke aneinanderstoßen. Ein unter einem beliebigen Winkel in das Tripelprisma einfallender Lichtstrahl kehrt nach dreifacher Reflexion um 180° abgelenkt parallel zum einfallenden Lichtstrahl zurück, wobei die Richtungsumkehr invariant gegen eine Drehung des Tripelprismas um eine beliebige Achse ist.

Zur Fokussierung der Teilstrahlen (6, 7) auf eine Bezugsebene weist die Strahlteiler-Vorrichtung optische Mittel auf.

Im dargestellten Ausführungsbeispiel, bei dem ein nicht vorfokussierter Lichtstrahl (5) geteilt wird, wird der erste Teilstrahl (6) durch eine in seinem Strahlengang angeordnete Linse (15) auf die Bezugsebene fokussiert. Alternativ dazu kann die Linse (15) auch im Strahlengang des Lichtstrahles (5) zwischen dem Linsensystem (8) und der Ablenkeinheit (2) angeordnet werden, beispielsweise stationär hinter dem ersten Polarisations-Umsetzer (9) oder vor dem Polarisations-Strahlteiler (12) in der rotierenden Ablenkeinheit (2). Der zweite Teilstrahl (7) wird durch eine in seinem Strahlengang angeordnete Linse (16) auf die Bezugsebene fokussiert. Alternativ dazu kann die Linse (16) auch in der rotierenden Ablenkeinheit (2) zwischen Polarisations-Strahlteiler (12) und Reflektor (14) angeordnet werden. Anstelle von jeweils einer Linse kann auch eine Linsenkombination verwendet werden.

Wird, wie im dargestellten Ausführungsbeispiel, ein nicht vorfokussierter Lichtstrahl (5) geteilt, haben die zur Fokussierung des ersten und zweiten Teilstrahles (6, 7) verwendeten Linsen gleiche optische Parameter. Wird dagegen ein durch eine entsprechende Ausbildung und Anordnung des Linsensystems (8) vorfokussierter Lichtstrahl geteilt, haben die entsprechenden Linsen zur Fokussierung des ersten und zweiten Teilstrahles (6, 7) unterschiedliche optische Parameter, wobei die Fokussiermittel in diesem Fall für einen der Teilstrahlen (6, 7) ganz entfallen können.

Nach der Beschreibung des Aufbaus der Strahlteiler-Vorrichtung wird deren Wirkungsweise näher erläutert.

Der von der Lichtquelle (1) erzeugte linear polarisierte Lichtstrahl (5) wird zunächst von dem Linsensystem (8) kollimiert und dann in dem ersten Polarisations-Umsetzer (9) in einen zirkular polarisierten Lichtstrahl (5) umgewandelt. Durch die Zirkularpolarisation des Lichtstrahles (5) wird erreicht, daß die Polarisationswirkung der Polarisationsschicht (17) des Polarisations-Strahlteilers (12) unabhängig vom jeweiligen Drehwinkel des Polarisations-Strahteilers (12) bzw. der rotierenden Ablenkeinheit (2) ist.

Der zirkular polarisierte Lichtstrahl (5) fällt auf die Polarisationsschicht (17) des Polarisations-Strahlteilers (12) und wird dort in zwei linear polarisierte Lichtkomponenten zerlegt, wobei die Lichtleistung des Lichtstrahles (5) nahezu verlustfrei halbiert wird. Die erste linear polarisierte Lichtkomponente wird an der Polarisationsschicht (17) reflektiert und bildet den ersten Teilstrahl (6). Verläuft der Lichtstrahl (5) aufgrund einer exakten Justierung in Richtung der optischen Achse (3) und liegt die Reflexionsschicht (17) unter einem Winkel von 45°, so tritt der erste Teilstrahl (6) senkrecht zur optischen Achse (3) aus der Ablenkeinheit (2) aus und erreicht die Bezugsebene in der Sollposition. Fehlt eine Justierung oder wurde eine Justierung nicht exakt durchgeführt, trifft der Lichtstrahl (5) unter einem Winkel zur optischen Achse (3) auf die Polarisationsschicht (17). Der erste Teilstrahl (6) tritt mit einer entsprechenden Winkelabweichung von der Senkrechten aus der Ablenkeinheit (2) aus und erreicht die Bezugsebene mit einem Positionsversatz gegenüber der Sollposition.

Die zweite linear polarisierte Lichtkomponente (20) wird durch die Polarisationsschicht (17) des Polarisations-Strahlteilers (12) durchgelassen und in Richtung des Reflektors (14) auf den zweiten Polarisations-Umsetzer (13) geleitet, der den Polarisationszustand der linear polarisierten Lichtkomponente (20) verändert. Die Lichtkomponente (20') wird an dem Reflektor (14) reflektiert, wobei der Polarisationszustand wieder verändert wird. Die reflektierte Lichtkomponente (20') durchläuft erneut den zweiten Polarisations-Umsetzer (13) aber in entgegengesetzter Richtung. Dadurch wird eine Drehung der Polarisationsebene um 90° gegenüber der Polarisationsebene der in Richtung des Reflektors (14) laufenden Lichtkomponente (20) erreicht, wodurch die von dem Reflektor (14) kommende Lichtkomponente (20') an der Polarisationsschicht (17) des Polarisations-Strahlteilers (12) als zweiter Teilstrahl (7) reflektiert wird.

Verläuft der Lichtstrahl (5) aufgrund einer exakten Justierung wiederum in Richtung der optischen Achse (3), tritt der zweite Teilstrahl (7) senkrecht zur optischen Achse (3) aus der Ablenkeinheit (2) aus und erreicht nach einer halben Umdrehung der Ablenkeinheit (2) die Bezugsebene ebenfalls in der Sollposition auf einer Zeile.

Tritt der Lichtstrahl (5) aufgrund einer fehlenden oder ungenauen Justierung dagegen um einen Winkel gegenüber der optischen Achse (3) geneigt in den Polarisations-Strahlteiler (12) ein, fällt die durchgelassene Lichtkomponente auch unter diesem Winkel auf das Tripelprisma (14) und wird von diesem in sich, d.h. unter Beibehaltung des jeweiligen Winkels, auf den Polarisations-Umsetzer (13) und die Polarisationsschicht (17) des Polarisations-Strahlteilers (12) zurückgeworfen. Der zweite Teilstrahl (7) tritt dadurch zwar immer noch mit einer Winkelabweichung von der Senkrechten aus der Ablenkeinheit (2) aus, aber die Winkelabweichung des zweiten Teilstrahles (7) hat, bezogen auf die Sollposition, dieselbe Richtung wie die Winkelabweichung des ersten Teilstrahles (6), wodurch der störende Einfluß des Positionsversatzes der beiden Teilstrahlen (6, 7), beispielsweise auf die Aufzeichnungsqualität eines Recorders, bereits verkleinert wird. Die Verwendung eines Tripelprismas (14) hat darüber hinaus den Vorteil, daß Lagetoleranzen, die beim Einbau des Tripelprismas in die Ablenkeinheit (2) entstehen, unkritisch in Bezug auf den Positionsversatz der Teilstrahlen (6, 7) sind.

Zur Korrektur des Positionsversatzes der beiden Teilstrahlen (6, 7) und zur gleichzeitigen Korrektur von eventuell vorhandenen Einbautoleranzen wird gemäß der Neuerung vorgeschlagen, in dem rotierenden Lichtablenker (2) eine automatische Strahlpositionskorrektur derart durchzuführen, daß sich beide Teilstrahlen (6, 7) stets in der Sollposition in der Bezugsebene befinden, auf die beide Teilstrahlen (6, 7) fokussiert sind.

Dadurch wird beispielsweise bei einem Recorder in vorteilhafter Weise unabhängig von Winkelfehlern des auf die Ablenkeinheit (2) auftreffenden Lichtstrahles (5) und von Einbautoleranzen des Polarisations-Strahlteilers (12), d. h. ohne aufwendige manuelle Justierungen, eine gute Aufzeichnungsqualität erreicht.

Die automatische Strahlpositionskorrektur erfolgt in vorteilhafter Weise durch Änderung des Neigungswinkels der Polarisationsschicht (17) des Polarisations-Strahteilers (12) und/oder durch Verschieben mindestens einer der Linsen (15, 16) im wesentlichen in Richtung der optischen Achse (3).

Die Änderung des Neigungswinkels der Polarisationsschicht (17) des Polarisations-Strahlteilers (12) wird durch Kippen des Polarisations-Strahlteilers (12) oder, falls Polarisations-Strahlteiler (12), Polarisations-Umsetzer (13) und Reflektor (14) kompakt miteinander zu einer Einheit zusammengefaßt sind, durch Kippen der gesamten Ablenkeinheit (2) erreicht.

Bei dem in Fig. 1 dargestellten Ausführungsbeispiel für eine Strahlteiler-Vorrichtung sind der Polarisations-Strahlteiler (12), Polarisations-Umsetzer (13) und das Tripelprisma (14) kompakt miteinander verbunden, und bei der zur automatischen Strahlpositionskorrektur wird eine Kippwinkelsteuerung der gesamten rotierenden Ablenkeinheit (2) durchgeführt, so daß gleichzeitig eine Änderung des Neigungswinkels der Polarisationsschicht (17) und eine Verschiebung der Linsen (15, 16) erfolgt.

Die gesamte Ablenkeinheit (2) ist mittels eines Lagers (21) um die optische Achse (3) kippbar an einem zylindrischen Träger (22) gelagert. Der Träger (22) ist mit dem Motor (4) verbunden. In den Träger (22) ist ein Verstellantrieb (23) zum Kippen der Ablenkeinheit (2) und die Wicklung (24a) mindestens eines Übertragers (24) eingebaut, dessen andere Wicklung (24b) in einem Abstand vom Träger (22) stationär angeordnet ist. Die mechanische Konstruktion von Lager (21), Träger (22) und Verstellantrieb (23) muß so gestaltet sein, daß eine rotationssymmetrische Massenverteilung erreicht wird. Der Verstellantrieb (23) ist beispielsweise ein Piezoantrieb oder ein geeigneter magnetostriktiver Antrieb. Solche Antriebe sind im Handel erhältlich. Der Übertrager (24) ist z.B. ein elektromagnetischer Übertrager, mit dem sich ohne weiteres eine Energieübertragung für den Piezoantrieb, der weniger als 1 mW Leistung benötigt, realisieren läßt.

Die Erfassung der Positionsversätze der beiden Teilstrahlen (6, 7) zueinander und die Ermittlung entsprechender Korrekturwerte für die Strahlpositionskorrektur können auf verschiedene Art und Weise erfolgen.

Der Positionsversätze der Teilstrahlen (6, 7) zueinander in der Bezugsebene (Fokusebene) können z. B., wie im Ausführungsbeispiel dargestellt, mittels einer Positions-Meßstufe (25) gemessen werden. Die Positions-Meßstufe (25) ist beispielsweise als Differentialfotodiode mit zwei voneinander getrennten lichtempfindlichen Flächen ausgebildet. Die Grenzlinie zwischen den lichtempfindlichen Flächen der Differentialfotodiode erstreckt sich in Ablenkrichtung der Teilstrahlen (6, 7) und befindet sich in der Sollposition für die beiden Teilstrahlen (6, 7). Die durch die einfallenden Teilstrahlen (6, 7) erzeugten Fotoströme der Differentialfotodiode werden einer Vergleichsstufe (26) zugeführt, die Positionsfehlerwerte als Maß für den Positionsversatz der Teilstrahlen (6, 7) senkrecht zur Ablenkrichtung erzeugt. Eine solche Positions-Meßstufe wird beispielsweise in der EP-B-0 054 170 ausführlich beschrieben.

Die Positionsfehlerwerte werden einem Regelverstärker (27) zugeführt, der mit der stationären Wicklung (24a) des Übertragers (24) verbunden ist. In dem Regelverstärker (27) werden die Positionsfehlerwerte in entsprechende Korrekturwerte umgesetzt, welche die notwendige Richtung und Amplitude der Verstellung des Verstellantriebes (23) bestimmen. Zur Energieübertragung an den Verstellantrieb (23) wird aus den Korrekturwerten eine primäre Wechselspannung erzeugt und diese der stationären Wicklung (24a) zugeführt. Die primäre Wechselspannung induziert in der rotierenden Wicklung (24b) des Übertragers (24) eine sekundäre Wechselspannung, die in einem Gleichrichter in eine Gleichspannung umgeformt wird. Die dem Verstellantrieb (23) zugeführte Gleichspannung bewirkt eine entsprechende Kippung der Ablenkeinheit (2) bis ein Kippwinkel erreicht ist, bei dem sich die beiden Teilstrahlen (6, 7) in der Sollposition in der Bezugsebene befinden.

Die zur Korrektur der Positionsversätze der Teilstrahlen (6, 7) benötigten Korrekturwerte werden beispielsweise in einer Meßphase vor dem eigentlichen Betrieb ermittelt und in dem Regelverstärker (27) gespeichert. Während des Betriebes werden dann die gespeicherten Korrekturwerte zur laufenden Positionskorrektur der beiden Teilstrahlen (6, 7) an den Verstellantrieb (23) übertragen.

Die Messung des Positionsversatzes der Teilstrahlen (6, 7) mittels der Positions-Meßstufe wird an einem separaten Meßplatz für die Strahlteiler-Vorrichtung, vorzugsweise aber in demjenigen Gerät vorgenommen, in das die Strahlteiler-Vorrichtung eingebaut ist. Wird die Strahlteiler-Vorrichtung in einem Belichter oder Recorder verwendet, ist die Bezugsfläche für die Positionsversatzmessung die Belichtungsebene, auf der das zu belichtende Filmmaterial angeordnet ist. In diesem Fall können die Positionsfehlerwerte bzw. Korrekturwerte für die Strahlpositionskorrektur alternativ zur Positionsfehlermessung auch derart ermittelt werden, daß im Recorder (Belichter) zunächst mit verschiedenen vorgegebenen Korrekturwerten ein Film streifenförmig belichtet und der belichtete Film zur Ermittlung des optimalen Korrekturwertes visuell oder meßtechnisch ausgewertet wird.

Prinzipiell ist es ausreichend, nur einen Übertrager (24) am Umfang des Trägers (22) vorzusehen und nur einen Korrekturwert pro Umdrehung an den Piezoantrieb zu übertragen, da dieser kapazitives Verhalten hat. Es ist aber wegen der rotationssymmetrischen Massenverteilung zweckmäßig, mehrere Übertrager (24) bzw. mehrere mit dem Träger (22) rotierende Wicklungen (24b) und stationäre Wicklungen (24a) vorzusehen.

Falls bei der Kippung der Ablenkeinheit (2) keine gleichzeitige Verschiebung der Linsen (16, 17) stattfinden soll, können die Linsen (15, 16) beispielsweise in einer einseitig offenen zylinderförmigen Linsen-Halterung gelagert werden, welche die Komponenten der Ablenkeinheit (2) umhüllt und deren eine Stirnseite an der Außenfläche des Träger (22) befestigt ist, so daß die Linsen-Halterung die Kippbewegung der Ablenkeinheit (2) nicht mitmacht.

Es liegt im Rahmen der Erfindung, die Positionsversätze der Teilstrahlen (6, 7) während des Betriebes durch eine laufende Regelung zu korrigieren, indem die Positionsversätze kontinuierlich gemessen und entsprechende Korrekturwerte zu dem rotierenden Ablenker (2) übertragen werden.

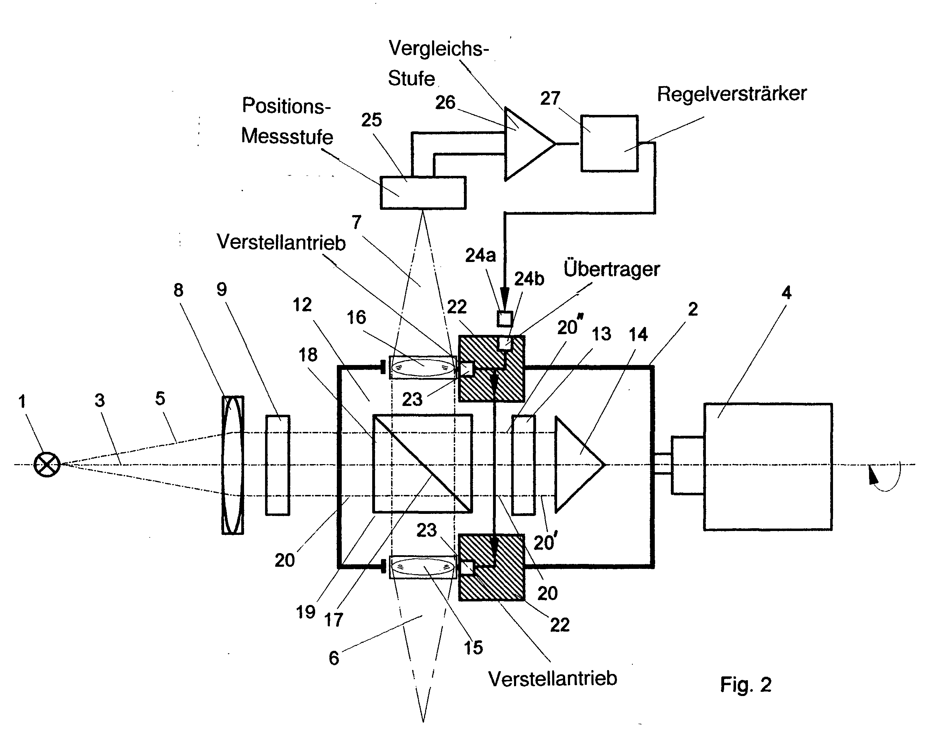

Fig. 2 zeigt ein weiteres Ausführungsbeispiel für eine Strahlteiler-Vorrichtung, bei der die automatische Strahlpositionskorrektur durch Verschieben der Linsen (15, 16) mittels der Verstellantriebe (23) in Richtung der optischen Achse (3) durchgeführt wird. Die Messung der Positionsversätze der Teilstahlen (6, 7) und die Übertragung der entsprechenden Korrekturwerte an die Verstellantriebe (23) erfolgt wie in Fig. 1 beschrieben.

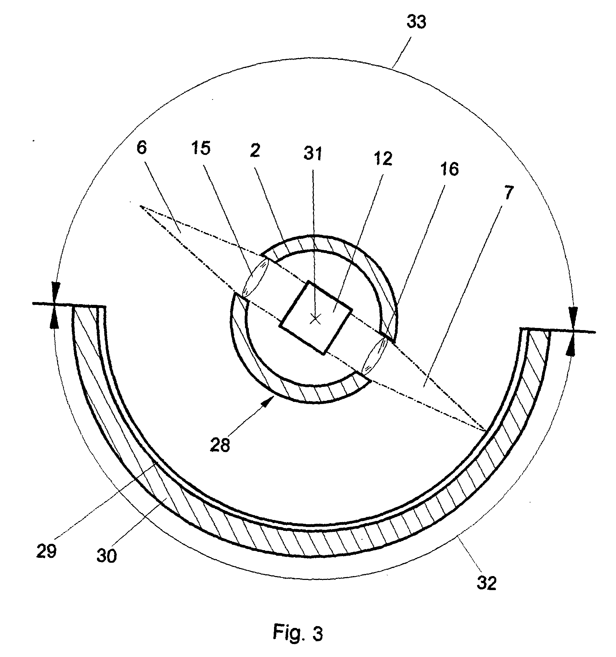

Fig. 3 zeigt ein Anwendungsbeispiel für die erfindungsgemäße Strahlteiler-Vorrichtung in einer Abtasteinrichtung (28) eines nach dem Innentrommelprinzip arbeitenden Recorders (Belichters). Bei einem solchen Innentrommel-Recorder ist das Aufzeichnungsmaterial (29) an der Innenwand eines Zylindersegments als Belichtungsmulde (30) fixiert. Die Abtasteinrichtung (28) rotiert um die Längsachse (31) der Belichtungsmulde (30). Die Abtasteinrichtung (28) weist die in Fig. 1 dargestellte Strahlteiler-Vorrichtung auf. Die Teilstrahlen (6, 7) werden von einem Bildsignal helligkeitsmoduliert und zur Belichtung punkt- und zeilenweise über das Aufzeichnungsmaterial (29) geführt. Dabei bewegt sich die Abtasteinrichtung (28) in Richtung der Längsachse (31) mittels eines nicht dargestellten Antriebes. Jede Umdrehung der Lichtstrahl-Ablenkvorrichtung ist in einen Arbeitsbereich (32) bzw. ein Arbeits-Zeitintervall und einen Rückführungsbereich (33) bzw. ein Rückführungs-Zeitintervall unterteilt. Während der eine Teilstrahl (6 bzw. 7) jeweils aktiv ist und zur Belichtung des Aufzeichnungsmaterials (29) den Arbeitsbereich (32) von dem Anfang einer Zeile zu dem Ende der Zeile überstreicht, wird der jeweils inaktive Teilstrahl (7 bzw. 6) in dem Rückführungsbereich (33) zum Anfang der nächsten Zeile zurückgeführt. Durch die Aufzeichnung mit zwei Teilstrahlen (6, 7) wird der Nutzungsgrad des Belichters verdoppelt.

In den bisher beschriebenen Strahlteiler-Vorrichtungen zur Anwendung in Belichtern haben die beiden belichtenden Teilstrahlen (6, 7) jeweils 50% der Lichtleistung des der Strahlteiler-Vorrichtung zugeführten Eingangslichtstrahles (5). Zur Belichtung von bestimmten Materialien wird aber oft eine größere Lichtleistung benötigt. Um eine größere Lichtleistung zu erreichen, wird erfindungsgemäß vorgeschlagen, die Entstehung des jeweils inaktiven Teilstrahls (6 bzw. 7) während des Rückführungs-Intervalles zu verhindern, so daß keine Aufteilung der Lichtleistung erfolgt, und der jeweils aktive Teilstrahl (7 bzw. 6) nahezu die volle Lichtleistung des Eingangslichtstrahles (5) aufweist.

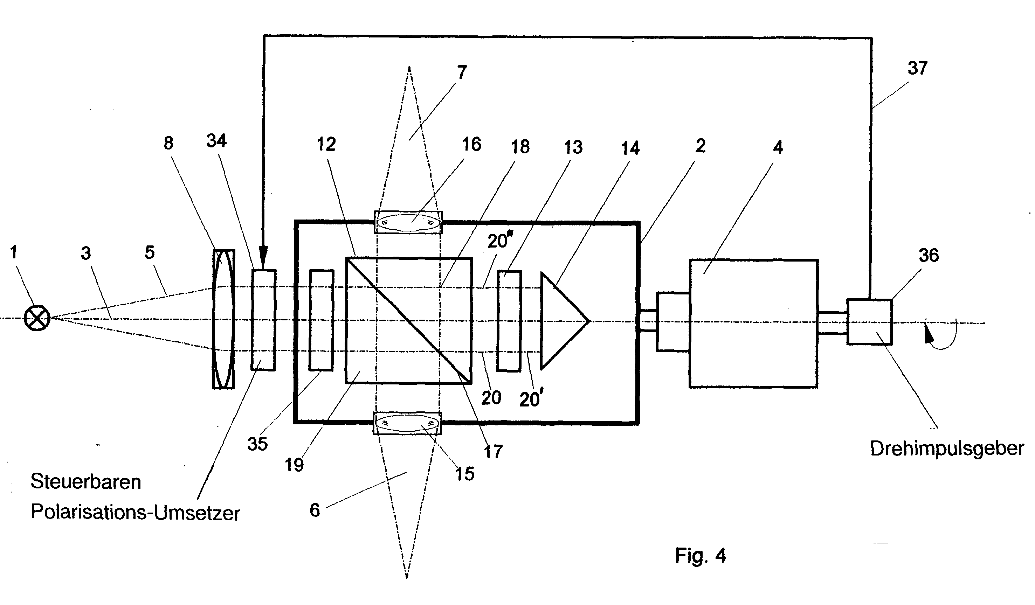

Fig. 4 zeigt eine vorteilhafte Weiterbildung einer Strahlteiler-Vorrichtung mit einem abschaltbaren inaktiven Teilstrahl (6 bzw. 7) im jeweiligen Rückführungsintervall zur Vergrößerung der Lichtleistung des jeweils aktiven Teilstrahles (7 bzw. 6).

Die Strahlteiler-Vorrichtung nach Fig. 4 unterscheidet sich von der nach Fig. 1 dadurch, daß der stationäre erste Polarisations-Umsetzer (9) durch einen steuerbaren Polarisations-Umsetzer (34) ersetzt ist und daß in der rotierenden Ablenkeinheit (2) vor dem Polarisations-Strahlteiler (12) ein Polarisations-Umsetzer (35) angeordnet ist, der mit dem Polarisations-Strahlteiler (12) beispielsweise durch Klebung verbunden sein kann. Ferner ist auf der optischen Achse ein programmierbarer Drehimpulsgeber (36) angeordnet, der mit dem Motor (4) mechanisch verbunden ist und ein zweipegliges Steuersignal über eine Leitung (37) an den steuerbaren Polarisations-Umsetzer (34) liefert.

Der Drehimpulsgeber (36) ist derart programmierbar, daß in jeder Umdrehung der Ablenkeinheit (2) das zweipeglige Steuersignal während des Arbeitsbereiches (Fig 3; 32) des einen Teilstrahles (6 bzw. 7) den einen Signalpegel und während des Rückführungsbereiches (Fig. 3; 33) des anderen Teilstrahles (7 bzw. 6) den anderen Signalpegel einnimmt. Somit lassen sich die Längen der Arbeitsbereiche und der Rückführungsbereiche der Teilstrahlen (6, 7) in vorteilhafter Weise durch die Art der Programmierung unabhängig voneinander festlegen.

Der steuerbare Polarisations-Umsetzer (34) enthält einen elektrooptischen Modulator, welcher die Linearpolarisation eines einfallenden Lichtstrahles in eine Zirkularpolarisation umsetzt und die Drehrichtung der Zirkularpolarisation in Abhängigkeit von dem jeweiligen Signalpegel des Steuersignals auf der Leitung (37) umschaltet. Der Polarisations-Umsetzer (34) ist als Wellenplatte, beispielsweise als λ/4-Platte, ausgebildet.

Die lineare Polarisation des von der Lichtquelle (1) kommenden Lichtstrahls (5) wird in dem steuerbaren Polarisations-Umsetzer (34) zunächst in eine zirkulare Polarisation umgewandelt. In Abhängigkeit von dem jeweiligen Signalpegel des Steuersignals wird dann die Drehrichtung der Zirkularpolarisation umgeschaltet. Die Umsetzung der Linearpolarisation des Lichtstrahles (5) in die Zirkularpolarisation und die Änderung der Drehrichtung der Zirkularpolarisation kann selbstverständlich auch in getrennten Baugruppen vorgenommen werden.

In dem mit der Ablenkeinheit (2) rotierenden Polarisations-Umsetzer (35) wird dann die zirkulare Polarisation des Lichtstrahles (5) in Abhängigkeit von der jeweiligen Drehrichtung der Zirkularpolarisation in eine lineare Polarisation mit einem ersten Polarisationszustand, beispielsweise eine lineare Polarisation mit einer 0°- Polarisationsebene, oder mit einem zweiten Polarisationszustand, beispielsweise in eine linare Polarisation mit einer 90°-Polarisationsebene, umgesetzt.

Weist der linear polarisierte Lichtstrahl (5) den ersten Polarisationszustand auf, wird der Lichtstrahl (5) an der Polarisationsschicht (17) des Polarisations-Strahlteilers (12) reflektiert, aber nicht von dieser durchgelassen, so daß nur der erste Teilstrahl (6) mit nahezu der vollen Lichtleistung des Lichtstrahles (5) entsteht. Weist der linear polarisierte Lichtstrahl (5) dagegen den zweiten Polarisationszustand auf, wird der Lichtstrahl (5) von der Polarisationsschicht (17) des Polarisations-Strahlteilers (12) durchgelassen, aber nicht an dieser reflektiert, so daß nur der zweite Teilstrahl (7) mit nahezu der vollen Lichtleistung des Lichtstrahles (5) gebildet wird.

Die erfindungsgemäße Strahlteiler-Vorrichtung kann bei Aufzeichnungsgeräten vom Innentrommel-Typ oder vom Flachbett-Typ Anwendung finden. Es liegt im Rahmen der Erfindung, die Strahlteiler-Vorrichtung auch bei Vorlagen-Abtastgeräten einzusetzen.

## Patentansprüche

1. Vorrichtung zur Teilung eines Lichtstrahles in zwei Teilstrahlen, bestehend aus
- einer stationären Lichtquelle (1) zur Erzeugung eines Lichtstrahles (5) entlang einer optischen Achse (3),
- einem in der optischen Achse (3) vor der Lichtquelle (1) angeordneten Objektiv (8) und
- einer von dem Lichtstrahl (5) beaufschlagten, um die optische Achse (3) rotierbaren Ablenkeinheit (2), welche enthält
- einen Polarisations-Strahlteiler (12), welcher den Lichtstrahl (5) in eine reflektierte, im wesentlichen senkrecht zur optischen Achse (3) verlaufende polarisierte Lichtkomponente als ersten Teilstrahl (6) und in eine durchgelassene, im wesentlichen in Richtung der optischen Achse (3) verlaufende polarisierte Lichtkomponente (20) zerlegt,
- einen auf der optischen Achse (3) hinter dem Polarisations-Strahlteiler (12) angeordneten Polarisations-Umsetzer (13) und einen Reflektor (14), welche die durchgelassene Lichtkomponente (20) in eine bezüglich der Polarisationsrichtung in der Phase um 90° gedrehte polarisierte Lichtkomponente (20') transformieren, wobei die auf den Polarisations-Strahlteiler (12) zurückgeworfene gedrehte polarisierte Lichtkomponente (20") an dem Polarisations-Strahlteiler (12) als zweiter Teilstrahl (7) reflektiert wird, sowie
- Fokussierungsmittel (15, 16) für die Teilstrahlen (6, 7) auf eine Bezugsfläche, **gekennzeichnet durch**
- Mittel (25, 26, 27) zur Festellung von relativen Positionsversätzen der Teilstrahlen (6, 7) in der Bezugsfläche und zur Ermittlung von den festgestellten Positionsversätzen entsprechenden Korrekturwerten,
- Mittel (24) zur Übertragung der Korrekturwerte an die rotierende Ablenkeinheit (2) und
- Mittel (22, 23) in der rotierenden Ablenkeinheit (2) zur Änderung des Neigungswinkels des Polarisations-Strahlteilers (12) gegenüber der optischen Achse (3) und/oder zur Verschiebung der Fokussierungsmittel (15, 16) für die Teilstrahlen (6, 7) in Abhängigkeit von den übertragenden Korrekturwerten zwecks Korrektur der relativen Positionsversätze der Teilstrahlen (6, 7).

2. Vorrichtung nach Anspruch 1, weiter **dadurch gekennzeichnet, daß** die Mittel (25, 26, 27) zur Festellung der relativen Positionsversätze der Teilstrahlen (6, 7) und zur Ermittlung der den festgestellten Positionsversätzen entsprechenden Korrekturwerte eine in der Bezugsfläche der Teilstrahlen (6, 7) angeordnete Positions-Meßstufe (25) aufweisen.

3. Vorrichtung nach Anspruch 2, weiter **dadurch gekennzeichnet, daß** als Positions-Meßstufe (25) eine Differenzial-Fotodiode verwendet wird.

4. Vorrichtung nach einem der Ansprüche 1bis 3, weiter **dadurch gekennzeichnet, daß** die Mittel (24) zur Übertragung der Korrekturwerte an die rotierende Ablenkeinheit (2) als elektromagnetischer Übertrager ausgebildet sind.

5. Vorrichtung nach einem der Ansprüche 1 bis 4 weiter **dadurch gekennzeichnet, daß** die Mittel (22, 23) zur Änderung des Neigungswinkels des Polarisations-Strahlteilers (12) mit dem Polarisations-Strahlteiler (12) in Wirkverbindung stehen.

6. Vorrichtung nach einem der Ansprüche 1 bis 4, weiter **dadurch gekennzeichnet, daß**
- der Polarisations-Strahlteiler (12) mit der Ablenkeinheit (2) verbunden ist und
- die Mittel (22, 23) zur Änderung des Neigungswinkels des Polarisations-Strahlteilers (12) mit der Ablenkeinheit (2) in Wirkverbindung stehen.

7. Vorrichtung nach einem der Ansprüche 1 bis 6, wobei die Fokussierungsmittel (15, 16) für den ersten Teilstrahl (6) aus mindestens einer Linse (15) bestehen, die zwischen Objektiv (8) und Polarisations-Strahlteiler (12) und/oder im Strahlengang des ersten Teilstrahles (6) angeordnet ist.

8. Vorrichtung nach einem der Ansprüche 1 bis 7, wobei die Fokussierungsmittel (15, 16) für den zweiten Teilstrahl (7) aus mindestens einer Linse (16) bestehen, die zwischen dem Polarisations-Strahlteiler (12) und dem Reflektor (14) und/oder im Strahlengang des zweiten Teilstrahles (7) angeordnet ist.

9. Vorrichtung nach Anspruch 7 oder 8, weiter **dadurch gekennzeichnet, daß** die Mittel (22, 23) zur Verschiebung der Fokussierungsmittel (15, 16) für die Teilstrahlen (6, 7) mit mindestens einer der Linsen (15, 16) in Wirkverbindung stehen.

10. Vorrichtung nach einem der Ansprüche 1 bis 9, weiter **dadurch gekennzeichnet, daß** die Mittel (22, 23) zur Änderung des Neigungswinkels des Polarisations-Strahlteilers (12) und/oder zur Verschiebung der Fokussierungsmittel (15, 16) einen durch die Korrekturwerte steuerbarer Verstellantrieb aufweisen.

11. Vorrichtung nach Anspruch 10, weiter **dadurch gekennzeichnet, daß** als Verstellantrieb (23) ein Piezoantrieb verwendet wird.

12. Vorrichtung nach Anspruch 10, weiter **dadurch gekennzeichnet, daß** als Verstellantrieb (23) ein magnetostriktiver Antrieb verwendet wird.

13. Vorrichtung nach einem der Ansprüche 1 bis 12, weiter **dadurch gekennzeichnet, daß** die Lichtquelle (1) einen zirkular polarisierten Lichtstrahl (5) erzeugt.

14. Vorrichtung nach einem der Ansprüche 1 bis 13, wobei
- die Lichtquelle (1) einen linear polarisierten Lichtstrahl (5) erzeugt und
- auf der optischen Achse (3) zwischen der Lichtquelle (1) und der rotierender Ablenkeinheit (2) ein weiterer Polarisations-Umsetzer (9) angeordnet ist, welcher die lineare Polarisation des Lichtstrahles (5) in eine zirkulare Polarisation umsetzt.

15. Vorrichtung nach einem der Ansprüche 1 bis 14, wobei die Polarisations-Umsetzer (9, 13) als doppelbrechende Platten, beispielsweise als λ/4-Platten, ausgebildet sind.

16. Vorrichtung nach einem der Ansprüche 1 bis 15, weiter **dadurch gekennzeichnet, daß** der Reflektor (14) als Tripelprisma ausgebildet ist.

17. Vorrichtung nach einem der Ansprüche 1 bis 16, weiter **dadurch gekennzeichnet, daß** zur Vergrößerung der Lichtleistung des jeweils aktiven Teilstrahles (6 bzw. 7)
- die Lichtquelle (1) einen zirkular polarisierten Lichtstrahl (5) erzeugt,
- vor der Ablenkeinheit (2) ein steuerbarer Polarisations-Umsetzer (34) stationär angeordnet ist, welcher in Abhängigkeit von einem Steuersignal die Drehrichtung der Zirkularpolarisation des Lichtstrahles (5) umschaltet und
- in der rotierenden Ablenkeinheit (2) vor dem Polarisations-Strahlteiler (12) ein weiterer Polarisations-Umsetzer (35) angeordnet ist, welcher die zirkulare Polarisation des Lichtstrahles (5) in Abhängigkeit von der jeweiligen Drehrichtung der Zirkularpolarisation in eine lineare Polarisation mit einem ersten Polarisationszustand oder einem zweiten Polarisationszustand umwandelt, wobei der linear polarisierte Lichtstrahl (5) mit dem ersten Polarisationszustand an dem Polarisations-Strahlteiler (12) zur Generierung des aktiven Teilstrahles (6 bzw. 7) reflektiert, aber von dem Polarisations-Strahlteiler (12) zur Generierung des inaktiven Teilstrahles (7 bzw. 6) nicht durchgelassen wird und wobei der linear polarisierte Lichtstrahl (5) mit dem zweiten Polarisationszustand von dem Polarisations-Strahlteiler (12) zur Generierung des aktiven Teilstrahles (6 bzw. 7) durchgelassen, aber an dem Polarisations-Strahlteiler (12) zur Generierung des inaktiven Teilstrahles (7 bzw. 6) nicht reflektiert wird.

18. Vorrichtung nach Anspruch 17, weiter **dadurch gekennzeichnet, daß** der steuerbare Polarisations-Umsetzer (34) als elektrooptischer Modulator ausgebildet ist.

19. Vorrichtung nach Anspruch 17 oder 18, weiter **dadurch gekennzeichnet, daß** der Polarisations-Umsetzer (35) als Wellenplatte ausgebildet ist.

20. Vorrichtung nach einem der Ansprüche 17 bis 19, weiter **gekennzeichnet durch** einen mit der Ablenkeinheit (2) gekoppelten Drehimpulsgeber (36), welcher das Steuersignal für den steuerbaren Polarisations-Umsetzer (35) erzeugt, wobei das Steuersignal in jeder Umdrehung der Ablenkeinheit (2) ein Arbeits-Zeitintervall festlegt, in dem ein Teilstrahl (6 bzw. 7) eingeschaltet und der andere Teilstrahl (7 bzw. 6) abgeschaltet ist.

## Claims

1. Apparatus for splitting a light beam into two part-beams, comprising
- a fixed light source (1) for producing a light beam (5) along an optical axis (3),
- an objective (8) arranged in the optical axis (3) in front of the light source (1) and
- a deflector unit (2) which lies in the path of the light beam (5) and is rotatable about the optical axis (3), and which comprises
- a polarization beam splitter (12) which divides the light beam (5) into a reflected polarized light component extending essentially perpendicularly to the optical axis (3) as a first part-beam (6) and a transmitted polarized light component (20) extending essentially in the direction of the optical axis (3),
- a polarization converter (13) arranged on the optical axis (3) behind the polarization beam splitter (12) and a reflector (14), which transform the transmitted light component (20) into a polarized light component (20') rotated in phase through 90° with respect to the polarization direction, the rotated polarized light component (20") reflected back to the polarization beam splitter (12) being reflected at the polarization beam splitter (12) as a second part-beam (7), and
- means (15, 16) for focusing the part-beams (6, 7) on to a reference surface,
**characterized by**
- means (25, 26, 27) for detecting relative misalignments of the part-beams (6, 7) in the reference surface and for determining correction values corresponding to the detected misalignments,
- means (24) for transmitting the correction values to the rotating deflector unit (2) and
- means (22, 23) in the rotating deflector unit (2) for modifying the angle of inclination of the polarization beam splitter (12) to the optical axis (3) and/or for shifting the focusing means (15, 16) for the part-beams (6, 7) as a function of the transmitted correction values in order to correct the relative misalignments of the part-beams (6, 7).

2. Apparatus according to Claim 1, further **characterized in that** the means (25, 26, 27) for detecting the relative misalignments of the part-beams (6, 7) and for determining the correction values corresponding to the detected misalignments have a position-sensing stage (25) arranged in the reference surface of the part-beams (6, 7).

3. Apparatus according to Claim 2, further **characterized in that** a differential photodiode is used as the position-sensing stage (25).

4. Apparatus according to any one of Claims 1 to 3, further **characterized in that** the means (24) for transmitting the correction values to the rotating deflector unit (2) are in the form of an electromagnetic transformer.

5. Apparatus according to anyone of Claims 1 to 4, further **characterized in that** the means (22, 23) for modifying the angle of inclination of the polarization beam splitter (12) are actively connected to the polarization beam splitter (12).

6. Apparatus according to any one of Claims 1 to 4, further **characterized in that**
- the polarization beam splitter (12) is connected to the deflector unit (2) and
- the means (22, 23) for modifying the angle of inclination of the polarization beam splitter (12) are actively connected to the deflector unit (2).

7. Apparatus according to any one of Claims 1 to 6, wherein the focusing means (15, 16) for the first part-beam (6) comprise at least one lens (15) arranged between objective (8) and polarization beam splitter (12) and/or in the ray path of the first part-beam (6).

8. Apparatus according to any one of Claims 1 to 7, wherein the focusing means (15, 16) for the second part-beam (7) comprise at least one lens (16) arranged between the polarization beam splitter (12) and the reflector (14) and/or in the ray path of the second part-beam (7).

9. Apparatus according to Claim 7 or Claim 8, further **characterized in that** the means (22, 23) for shifting the focusing means (15, 16) for the part-beams (6, 7) are actively connected to at least one of the lenses (15, 16).

10. Apparatus according to any one of Claims 1 to 9, further **characterized in that** the means (22, 23) for modifying the angle of inclination of the polarization beam splitter (12) and/or for shifting the focusing means (15, 16) have a positioning drive controllable by the correction values.

11. Apparatus according to Claim 10, further **characterized in that** a piezo drive is used as the positioning drive (23).

12. Apparatus according to Claim 10, further **characterized in that** a magnetostrictive drive is used as the positioning drive (23).

13. Apparatus according to any one of Claims 1 to 12, further **characterized in that** the light source (1) produces a light beam (5) with circular polarization.

14. Apparatus according to any one of Claims 1 to 13, wherein
- the light source produces a light beam (5) with linear polarization and
- a further polarization converter (9) which converts the linear polarization of the light beam (5) into a circular polarization is arranged on the optical axis (3) between the light source (1) and the rotating deflector unit (2).

15. Apparatus according to any one of Claims 1 to 14, wherein the polarization converters (9, 13) are in the form of birefringent plates, for example quarter-wave plates.

16. Apparatus according to any one of Claims 1 to 15, further **characterized in that** the reflector (14) is in the form of a triple prism.

17. Apparatus according to any one of Claims 1 to 16, further **characterized in that**, with a view to increasing the light output of the active part-beam (6 or 7, as the case may be),
- the light source (1) produces a light beam (5) with circular polarization,
- a controllable polarization converter (34) which switches the sense of rotation of the circular polarization of the light beam (5) as a function of a control signal is fixedly arranged in front of the deflector unit (2) and
- a further polarization converter (35), which, depending on the sense of direction of the circular polarization of the light beam (5), converts the circular polarization of the light beam (5) into a linear polarization with a first polarization condition or a second polarization condition, is arranged in the rotating deflector unit (2) in front of the polarization beam splitter (12), the linearly polarized light beam (5) with the first polarization condition being reflected at the polarization beam splitter (12) to generate the active part-beam (6 or 7) but not transmitted through the polarization beam splitter (12) to generate the inactive part-beam (7 or 6), and the linearly polarized light beam (5) with the second polarization condition being transmitted through the polarization beam splitter (12) to generate the active part-beam (6 of 7) but not reflected at the polarization beam splitter (12) to generate the inactive part-beam (7 or 6).

18. Apparatus according to Claim 17, further **characterized in that** the controllable polarization converter (34) is in the form of an electrooptical modulator.

19. Apparatus according to Claim 17 or Claim 18, further **characterized in that** the polarization converter (35) is in the form of a wave plate.

20. Apparatus according to any one of Claims 17 to 19, further **characterized by** a rotary pulse generator (36) which is coupled with the deflector unit (2) and which generates the control signal for the controllable polarization converter (35), the control signal determining an operating time interval in every revolution of the deflector unit (2) in which one part-beam (6 or 7) is switched on and the other part-beam (7 or 6) is switched off.

## Revendications

1. Dispositif pour séparer un faisceau lumineux en deux faisceaux partiels, comprenant :
- une source lumineuse fixe (1) pour générer un faisceau lumineux (5) suivant un axe optique (3),
- un objectif (8) placé dans l'axe optique (3) de la source lumineuse (1), et
- un organe déflecteur (2) recevant le faisceau lumineux (5) et pouvant tourner autour de l'axe optique (3) qui comporte :
- un séparateur de faisceaux de polarisation (12) qui décompose le faisceau lumineux (5) en une composante de lumière polarisée, réfléchie, essentiellement perpendiculaire à l'axe optique (3), comme premier faisceau partiel (6), et en une composante de lumière (20), polarisée, dirigée essentiellement suivant l'axe optique (3),
- un convertisseur de polarisation (13) placé sur l'axe optique (3) derrière le séparateur de faisceaux de polarisation (12) et un réflecteur (14), qui transforment la composante de lumière (20) ayant traversé, en une composante de lumière (20') dont la polarisation a tourné en phase de 90° par rapport à la direction de polarisation,
la composante de lumière (20"), polarisée, renvoyée vers le séparateur de faisceaux de polarisation (12), étant réfléchie comme second faisceau partiel (7) sur le séparateur de faisceaux de polarisation (12), ainsi que
- des moyens de focalisation (15, 16) pour les faisceaux partiels (6, 7) sur une surface de référence,
**caractérisé par**
- des moyens (25, 26, 27) pour fixer les décalages de position relatifs des faisceaux partiels (6, 7) dans la surface de référence, et pour déterminer des valeurs de contour correspondant au décalage de position constaté,
- des moyens (24) pour transmettre les valeurs de correction à l'unité de déflexion rotative (2) et
- des moyens (22, 23) prévus dans l'unité de déflexion rotative (2) pour modifier l'angle d'inclinaison du séparateur de faisceaux de polarisation (12) par rapport à l'axe optique (3) et/ou pour décaler les moyens de focalisation (15, 16) pour les faisceaux partiels (6, 7) selon les valeurs de correction transmises, pour corriger les décalages de position relatifs des faisceaux partiels (6, 7).

2. Dispositif selon la revendication 1,
**caractérisé en outre en ce que**
- les moyens (25, 26, 27) pour déterminer les décalages de position relatifs des faisceaux partiels (6, 7) et pour déterminer les valeurs de correction correspondant au décalage de position constaté comportent un étage de mesures de position (25) placé dans la surface de référence des faisceaux partiels (6, 7).

3. Dispositif selon la revendication 2,
**caractérisé en outre en ce que**
l'étage de mesures de position (25) est une photodiode différentielle.

4. Dispositif selon l'une quelconque des revendications 1 à 3,
**caractérisé en outre en ce que**
les moyens (24) de transmission des valeurs de correction sont réalisés comme convertisseurs électromagnétiques sur l'unité de déflexion rotative (2).

5. Dispositif selon l'une quelconque des revendications 1 à 4,
**caractérisé en ce que**
les moyens (22, 23) pour modifier l'angle d'inclinaison du séparateur de faisceaux de polarisation (12) coopèrent avec ce séparateur de faisceaux de polarisation (12).

6. Dispositif selon l'une quelconque des revendications 1 à 4,
**caractérisé en outre en ce que**
- le séparateur de faisceaux de polarisation (12) est relié à l'unité de déflexion (2), et
- les moyens (22, 23) pour modifier l'angle d'inclinaison du séparateur de faisceaux de polarisation (12) coopèrent avec l'unité de déflexion (2).

7. Dispositif selon l'une quelconque des revendications 1 à 6,
selon lequel
les moyens de focalisation (15, 16) du premier faisceau partiel (6) se composent d'au moins une lentille (15) placée entre l'objectif (8) et le séparateur de faisceaux de polarisation (12) et/ou dans le chemin du premier faisceau partiel (6).

8. Dispositif selon l'une quelconque des revendications 1 à 6,
selon lequel
les moyens de focalisation (15, 16) pour le deuxième faisceau partiel (7) se composent d'au moins une lentille (6) placée entre le séparateur de faisceaux de polarisation (12) et le réflecteur (14) et/ou dans le chemin du second faisceau partiel (7).

9. Dispositif selon l'une quelconque des revendications 7 ou 8,
**caractérisé en outre en ce que**
les moyens (22, 23) pour décaler les moyens de focalisation (15, 16) des faisceaux partiels (6, 7), coopèrent avec au moins des lentilles (15, 16).

10. Dispositif selon l'une quelconque des revendications 1 à 9,
**caractérisé en outre en ce que**
les moyens (22, 23) pour modifier l'angle d'inclinaison du séparateur de faisceaux de polarisation (12) et/ou pour décaler les moyens de focalisation (15, 16), comportent un actionneur commandé par les valeurs de correction.

11. Dispositif selon la revendication 10,
**caractérisé en ce que**
l'actionneur (23) est un actionneur piézo-électrique.

12. Dispositif selon la revendication 10,
**caractérisé en outre en ce que**
l'actionneur (23) est un actionneur magnétostrictif.

13. Dispositif selon l'une quelconque des revendications 1 à 12,
**caractérisé en outre en ce que**
la source lumineuse (1) génère un faisceau lumineux (5) à polarisation circulaire.

14. Dispositif selon l'une quelconque des revendications 1 à 13,
selon lequel
- la source lumineuse (1) génère un faisceau lumineux polarisé (5), et
- sur l'axe optique (3), entre la source lumineuse (1) et l'unité de déflexion rotative (2), il y a un autre convertisseur de polarisation (9) transformant la polarisation linéaire du faisceau lumineux (5) en une polarisation circulaire.

15. Dispositif selon l'une quelconque des revendications 1 à 14,
**caractérisé en ce que**
le convertisseur de polarisation (9, 13) est formé de plaques à double réfraction, par exemple des plaques λ/4.

16. Dispositif selon l'une quelconque des revendications 1 à 15,
**caractérisé en outre en ce que**
le réflecteur est un triple prisme.

17. Dispositif selon l'une quelconque des revendications 1 à 16,
**caractérisé en outre en ce que**
pour augmenter la puissance lumineuse de chaque faisceau partiel actif (6, 7),
- la source lumineuse (1) génère un faisceau lumineux (5) à polarisation circulaire,
- un convertisseur de polarisation (34), commandé, est installé de manière fixe devant l'unité de déflexion (2), ce convertisseur commutant le sens de rotation de la polarisation circulaire du faisceau lumineux (5) en fonction d'un signal de commande, et
- dans l'unité de déflexion rotative (2), devant le séparateur de faisceaux de polarisation (12), se trouve un autre convertisseur de polarisation (35) transformant la polarisation circulaire du faisceau lumineux (5), suivant le sens de rotation respectif de la polarisation circulaire, en une polarisation linéaire avec un premier état de polarisation et un second état de polarisation,
le faisceau lumineux (5) à polarisation linéaire avec le premier état de polarisation, est réfléchi sur le séparateur de faisceaux de polarisation (12) pour générer le faisceau partiel actif (6, 7), mais ce faisceau ne traverse pas le séparateur de faisceaux de polarisation (12) générant le faisceau partiel inactif (7, 6), et
le faisceau lumineux à polarisation linéaire (5) avec le second état de polarisation, traverse le séparateur de faisceaux de polarisation (12) générant le faisceau partiel actif (6, 7) mais n'est pas réfléchi par le séparateur de faisceaux de polarisation (12) pour générer la partie de faisceau inactive (7, 6).

18. Dispositif selon la revendication 17,
**caractérisé en outre en ce que**
le convertisseur de polarisation commandé (34) est un modulateur électro-optique.

19. Dispositif selon l'une quelconque des revendications 17 ou 18,
**caractérisé en outre en ce que**
le convertisseur de polarisation (35) est une plaque d'onde.

20. Dispositif selon l'une quelconque des revendications 17 à 19,
**caractérisé en outre par**
un générateur d'impulsions de rotation (36) couplé à l'unité de déflexion (2), ce générateur fournissant le signal de commande pour le convertisseur de polarisation commandé (35),
le signal de commande fixant, à chaque rotation de l'unité de déflexion (2), un intervalle de temps de travail au cours duquel un faisceau partiel (6, 7) est mis en oeuvre tandis que l'autre faisceau partiel (7, 6) est coupé.
